# EUROPÄISCHE PATENTSCHRIFT

(11) **EP 3 815 462 B1**
(45) Veröffentlichungstag und Bekanntmachung des Hinweises auf die Patenterteilung: **08.03.2023**
(21) Anmeldenummer: 19729045.5
(22) Anmeldetag: 12.06.2019
(51) Int. Cl.: H05B 3/84

(54) **SCHEIBE MIT EINEM ELEKTRISCHEN ANSCHLUSSELEMENT UND ANSCHLUSSKABEL**
PANE WITH ELECTRIC CONNECTION ELEMENT AND CONNECTING CABLE
VITRAGE DOTÉ D'UN ÉLÉMENT DE RACCORDEMENT ÉLECTRIQUE ET CÂBLE DE RACCORDEMENT

(30) Priorität: 26.06.2018 EP 18179698
(43) Veröffentlichungstag der Anmeldung: 05.05.2021
(73) Patentinhaber: SAINT-GOBAIN GLASS FRANCE, 92400 Courbevoie (FR)
(72) Erfinder: Helwer, Katja, 52152 Simmerath (DE); REUL, Bernhard, 52134 Herzogenrath (DE)
(74) Vertreter: Weber, Sophie
(86) Internationale Anmeldenummer: PCT/EP2019/065281
(87) Internationale Veröffentlichungsnummer: WO 2020/001977

(56) Entgegenhaltungen:
- EP-A1- 0 593 940
- WO-A1-2009/074267
- US-A- 3 616 122

## Beschreibung

Die Erfindung betrifft eine Scheibe mit einem elektrischen Anschlusselement und Anschlusskabel, ein Verfahren zu deren Herstellung und deren Verwendung.

Fahrzeugscheiben mit einer elektrisch leitfähigen Struktur sind hinlänglich bekannt. Sie werden insbesondere als Heckscheiben eingesetzt, bei denen die leitfähige Struktur beispielsweise als Heizleiter oder Antennenleiter ausgebildet ist. Diese leitfähigen Strukturen sind üblicherweise über angelötete elektrische Anschlusselemente mit einer Versorgungsspannung und Bordelektronik verbunden. Die Scheiben können mit dem Anschlusselement vorkonfektioniert hergestellt werden. Beim Einbau in die Fahrzeugkarosserie können die Anschlusselemente dann sehr einfach und zeitsparend mit den Verbindungskabeln zur Versorgungsspannung und Bordelektronik verbunden werden, insbesondere mittels einer Steckverbindung.

Das Anschlusselement kann ein steifes Element sein, das in Form einer Stromanschlussbrücke auf eine Anschlussfläche der leitfähigen Struktur gelötet wird. Ein Beispiel für ein steifes Anschlusselement mit Stecker Verbindung ist aus der EP 1488972 A2 bekannt. Das steife Anschlusselement weist den Nachteil auf, dass beim Aufstecken eines Verbindungskabels Scher- oder Hebelkräfte auftreten können, welche die Lötverbindung zwischen Anschlusselement und Scheibe belasten. Um die mechanischen Belastungen beim Aufstecken des Verbindungskabels zu minimieren, werden biegsame Anschlusselemente verwendet. Die biegsamen oder auch flexiblen Anschlusselemente sind an einem Ende mit einer Steckverbindung versehen und können dadurch an das fahrzeugseitige Verbindungskabel angeschlossen werden.

Das Verlöten des Anschlusselements erfolgt mit einem sogenannten Stempel-, Thermoden-, Induktions-, Widerstands- oder Heißluftlötverfahren. Beim Thermodenlöten wird durch eine Thermode Strom geleitet. Die Thermode ist so gestaltet, dass sie im Arbeitsbereich einen geringen Querschnitt aufweist und an dieser Stelle einen hohen elektrischen Widerstand hat. Diese führt zu einer starken Erwärmung in diesem Bereich. Durch eine geringe thermische Masse kann sich dieser Bereich wiederum auch schnell abkühlen. Dabei steht die Thermode in direktem Kontakt mit der Lötstelle, was zu Verschmutzung und Verschleiß führen kann. Da die Herstellung einer Scheibe mit biegsamem Anschlusselement eine erhöhte Taktzeit des Fertigungsprozesses erfordert, wird eine Standardisierung der Vorgänge angestrebt.

EP 0 593 940 A1 offenbart eine Verbundglasscheibe mit in der thermoplastischen Zwischenschicht eingebetteten Metalldrähten, einem Steckkontaktelement und einem das Steckkontaktelement mit den Metalldrähten verbindenden Anschlusskabel. Das Anschlusskabel ist als mit einem Isolationsmantel versehenes Flachbandkabel ausgebildet. Der eine Endabschnitt des Flachbandkabels ist zwischen den Einzelglasscheiben mit den Metalldrähten verbunden und in der thermoplastischen Zwischenschicht eingebettet. Das Flachbandkabel ist um die Umfangsfläche der Glasscheibe in Kontakt mit dieser herumgeführt. Der andere Endabschnitt des Flachbandkabels ist auf der Außenseite der Glasscheibe mit dieser verklebt.

WO 2009/074267 A1 offenbart eine Scheibe laut des Oberbegriffes des Anspruchs 1.

Der vorliegenden Erfindung liegt die Aufgabe zugrunde, eine Scheibe mit einem elektrischen Anschlusselement und Anschlusskabel zur Verfügung zu stellen, durch welche die vorstehend genannten Nachteile vermieden werden können. Zudem soll die Scheibe in der industriellen Herstellung einfach herstellbar sein.

Die Aufgabe der vorliegenden Erfindung wird erfindungsgemäß durch eine Scheibe mit einem elektrischen Anschlusselement und Anschlusskabel gemäß Anspruch 1 gelöst. Bevorzugte Ausführungen gehen aus den Unteransprüchen hervor.

Die erfindungsgemäße Scheibe mit einem elektrischen Anschlusselement und Anschlusskabel umfasst mindestens ein Substrat, eine elektrische leitfähige Struktur auf einem Bereich des Substrats, wobei das Anschlusskabel an seiner dem Substrat zugewandten Unterseite einen Kontaktbereich aufweist, in dem eine Leiterbahn des Anschlusskabels mit dem Bereich der elektrisch leitfähigen Struktur verbunden ist, das Anschlusselement steif ausgebildet ist und einen ersten flachen Bereich zur Kontaktierung des Anschlusskabels aufweist, das Anschlusselement mit der Leiterbahn des Anschlusskabels an einer dem Substrat abgewandten Oberseite des Anschlusskabels über eine Verschweißungsbereich mit dem Anschlusskabel elektrisch leitend verbunden ist. Die Anordnung des ersten flachen Bereichs des Anschlusselements wird dabei so gewählt, dass der flache Bereich und der Kontaktbereich des Anschlusskabels übereinander angeordnet sind. Der flache Bereich des Anschlusselements ist dabei zur Übertragung von Wärme auf eine im Kontakbereich angeordnete Lotmasse vorgesehen.

Durch die Anordnung des flachen Bereichs über den Kontaktbereich kann der flache Bereich des Anschlusselements in einfacher Weise mittels einer Vorrichtung zum Verlöten erwärmt werden. Dabei kann sowohl eine Vorrichtung zum Induktions-, Widerstands- oder Heißluftlöten verwendet werden. Der erfinderische Gedanke besteht nun darin, nicht die Lotmasse durch direkten Kontakt mit der Lötvorrichtung aufzuschmelzen, sondern durch eine Wärmeübertragung vom ersten flachen Bereich des Anschlusselements auf die Lotmasse. Dabei befindet sich der erste flache Bereich des Anschlusselements zwischen einer Lötvorrichtung und der Lotmasse. Auf diese Weise kann bei der Herstellung der Scheibe im Kontaktbereich angeordnete Lotmasse unkompliziert erwärmt werden.

Der Lötkontakt wird durch Aufschmelzen der Lotmasse erzielt, die beim anschließenden Erkalten bzw. Erstarren eine elektrisch leitfähige Verbindung zwischen dem Anschlusskabel und der elektrisch leitfähigen Struktur herstellt. Dabei erwärmt der erste flache Bereich des Anschlusselements die Lotmasse, solange ein Wärmeeintrag auf den flachen Bereich des Anschlusselements erfolgt. Mit einer derartigen Anordnung des Anschlusselements kann unabhängig von verwendeten Lötverfahren solange der Wärmeeintrag erfolgen, bis sich die Lotmasse verflüssigt und ein elektrischer Kontakt zwischen Anschlusselement und elektrisch leitfähiger Struktur hergestellt ist.

Die erfindungsgemäße Scheibe ist bevorzugt dafür vorgesehen, in einer Fensteröffnung eines Fahrzeugs den Innenraum gegenüber der äußeren Umgebung abzutrennen. Mit Innenraum kann der Fahrzeuginnenraum gemeint sein.

Das Anschlusskabel ist zur elektrischen Kontaktierung vorgesehen, bevorzugt als ein biegsames Anschlusskabel. Dieses Anschlusskabel verbindet die elektrisch leitfähige Struktur auf dem Substrat mit dem Anschlusselement. Dazu weist das Anschlusskabel bevorzugt einen ersten Abschnitt, einen zweiten Abschnitt und eine Faltung auf, bei der der erste Abschnitt und der zweite Abschnitt übereinander angeordnet sind, so dass die Faltung quer zur Längsausdehnung des Anschlusskabels verläuft. Hierzu verlaufen der erste Abschnitt und der zweite Abschnitt im Wesentlichen parallel zueinander.

Derartige Anschlusskabel werden auch als Flachleiter, Folienleiter oder Flachbandleiter bezeichnet. Unter Folienleiter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen oder Strukturen in Scheiben eignen, weisen lediglich eine Gesamtdicke von beispielsweise 0,3 mm auf. Derart dünne Folienleiter können einfach und ästhetisch auf der innenseitigen Oberfläche angeordnet und beispielsweise aufgeklebt werden. In einem Folienleiterband können sich mehrere voneinander elektrisch isolierte, leitfähige Schichten befinden. Das Anschlusskabel kann auch als ein sogenanntes "Flat Flex Cable" (FFC) oder FPC-Verbinder ausgebildet sein. FPC-Verbinder sind flexible Leiterplatten, die zur Verbindung von elektronischen Baugruppen vorgesehen sind.

Das Substrat enthält bevorzugt Glas, besonders bevorzugt Kalk-Natron-Glas. Das Substrat ist bevorzugt eine Glasscheibe, insbesondere Fensterglasscheibe. Das Substrat kann grundsätzlich auch andere Glasarten enthalten, beispielsweise Quarzglas oder Borsilikatglas. In einer weiteren bevorzugten Ausgestaltung enthält das Substrat ein Polymer, insbesondere Polycarbonat oder Polymethylmethacrylat. Aufgrund der Gewichtsersparnis werden polymere Materialien für Fensterscheiben zunehmend interessant. Das Substrat kann auch andere Polymere enthalten, beispielsweise Polyethylen, Polypropylen, Polystyrol, Polybutadien, Polynitrile, Polyester, Polyurethan, Polyvinylchlorid, Polyacrylat, Polyamid oder Polyethylenterephthalat.

Das Substrat ist bevorzugt transparent oder transluzent. Das Substrat weist bevorzugt eine Dicke von 0,5 mm bis 25 mm, besonders bevorzugt von 1 mm bis 10 mm und ganz besonders bevorzugt von 1,5 mm bis 5 mm auf.

Die erfindungsgemäße elektrisch leitfähige Struktur weist eine Schichtdicke von 5 µm bis 40 µm, besonders bevorzugt von 5 µm bis 20 µm, ganz besonders bevorzugt von 8 µm bis 15 µm und insbesondere von 10 µm bis 12 µm auf. Die erfindungsgemäße elektrisch leitfähige Struktur enthält bevorzugt Silber, besonders bevorzugt Silberpartikel und Glasfritten. Die Lotmasse ist in einer bevorzugten Ausgestaltung bleifrei. Das ist besonders vorteilhaft im Hinblick auf die Umweltverträglichkeit der erfindungsgemäßen Scheibe mit elektrischem Anschlusselement. Als bleifreie Lotmasse ist im Sinne der Erfindung eine Lotmasse zu verstehen, welche entsprechend der EG-Richtlinie "2002/95/EG zur Beschränkung der Verwendung bestimmter gefährlicher Stoffe in Elektro- und Elektronikgeräten" einen Anteil von kleiner oder gleich 0,1 Gew.-% Blei, bevorzugt kein Blei enthält.

Die Lotmasse enthält bevorzugt Zinn und Wismut, Indium, Zink, Kupfer, Silber oder Zusammensetzungen davon. Der Anteil an Zinn in der erfindungsgemäßen Lotzusammensetzung beträgt von 3 Gew.-% bis 99,5 Gew.-%, bevorzugt von 10 Gew.-% bis 95,5 Gew.-%, besonders bevorzugt von 15 Gew.-% bis 60 Gew.-%. Der Anteil an Indium, Zink, Kupfer, Silber oder Zusammensetzungen davon beträgt in der erfindungsgemäßen Lotzusammensetzung von 0,5 Gew.-% bis 97 Gew.-%, bevorzugt 10 Gew.-% bis 67 Gew.-%, wobei der Anteil an Indium, Zink, Kupfer oder Silber 0 Gew.-% betragen kann. Die Lotzusammensetzung kann Nickel, Germanium, Aluminium oder Phosphor mit einem Anteil von 0 Gew.-% bis 5 Gew.-% enthalten. Die erfindungsgemäße Lotzusammensetzung enthält ganz besonders bevorzugt In97Ag3, Sn95,5Ag3,8Cu0,7, Sn77,2In20Ag2,8, Sn95Ag4Cu1, Sn99Cu1, Sn96,5Ag3,5, Sn96,5Ag3Cu0,5, Sn97Ag3 oder Gemische davon.

In einer vorteilhaften Ausgestaltung enthält die Lotmasse von 90 Gew.-% bis 99,5 Gew.-% Zinn, bevorzugt von 95 Gew.-% bis 99 Gew.-%, besonders bevorzugt von 93 Gew.-% bis 98 Gew.-%. Die Lotmasse enthält neben Zinn bevorzugt von 0,5 Gew.-% bis 5 Gew.-% Silber und von 0 Gew.-% bis 5 Gew.-% Kupfer.

Die Schichtdicke der Lotmasse ist bevorzugt kleiner oder gleich 6.0 × 10⁻⁴ m, besonders bevorzugt kleiner 2.0 × 10⁻⁴ m.

Erfindungsgemäß umfasst das Anschlusselement den ersten flachen Bereich und einen Übergangsbereich sowie einen zweiten flachen Bereich an seinem vom Anschlusskabel abgewandten Ende. Das Anschlusselement ist ein starres, steifes, massives Bauteil. Der Übergangsbereich des Anschlusselements weist bevorzugt eine Länge von mindestens 30% der Länge des Anschlusselements auf.

In einer bevorzugten Ausgestaltung enthält das Anschlusselement zumindest Stahl oder Kupfer, eine kupferhaltige Legierung, beispielsweise elektrolytisches Kupfer. Ein solches Verbindungselement weist eine vorteilhaft hohe elektrische Leitfähigkeit auf.

In einer weiteren Ausgestaltung ist das Anschlusselement einstückig ausgebildet. Dadurch wird die Stabilität des Anschlusselements erhöht, was sich besonders bei einer Endmontage der Scheibe in ein Fahrzeug positiv auswirkt. Die Materialstärke des Anschlusselements beträgt bevorzugt von 0,1 mm bis 2 mm, besonders bevorzugt von 0,2 mm bis 1,5 mm, ganz besonders bevorzugt von 0,4 mm und 1 mm, beispielsweise 0,8 mm. Das Anschlusselement kann aber grundsätzlich auch mehrstückig ausgebildet sein, also aus zwei oder miteinander verbundenen steifen Einzelteilen bestehen.

In einer weiteren Ausgestaltung bildet das Anschlusselement mit dem Übergangsbereich einen Anstellwinkel (α) zum Anschlusskabel. Der Anstellwinkel (α) beträgt 30° bis 90°.

Die Abmessungen des Anschlusselements können vom Fachmann nach den Erfordernissen des Einzelfalls frei gewählt werden. Das Anschlusselement weist beispielsweise eine Länge und eine Breite von 1 mm bis 50 mm auf. Die Länge des Anschlusselements beträgt bevorzugt von 10 mm bis 30 mm, besonders bevorzugt von 20 mm bis 25 mm. Die Breite des Anschlusselements beträgt bevorzugt von 1 mm bis 30 mm, besonders bevorzugt von 2 mm bis 12 mm. Anschlusselemente mit diesen Abmessungen lassen sich besonders gut handhaben und eignen sich besonders zur elektrischen Kontaktierung leitfähiger Strukturen mit Anschlusskabel auf Scheiben.

In einer bevorzugten Ausgestaltung ist das Anschlusselement mittels einer Schweißverbindung an das Anschlusskabel angebracht. Das ist vorteilhaft, da eine Schweißverbindung schnell und kostengünstig herzustellen ist, so dass etablierte industrielle Prozesse nicht verändert werden müssen.

In einer weiteren bevorzugten Ausgestaltung ist das Anschlusselement am zweiten flachen Bereich zur Kontaktierung an eine Spannungsquelle vorgesehen ist. Das Anschlusselement weist bevorzugt am zweiten flachen Abschnitt einen Stecker oder Kabel aufweist. Die Länge des Anschlusselements wird durch die Tatsache bestimmt.

Die Erfindung umfasst außerdem ein Verfahren zur Herstellung einer erfindungsgemäßen Scheibe mit einem elektrischen Anschlusselement und Anschlusskabel, wobei zumindest
- das Anschlusselement auf einer Oberseite eines Anschlusskabels über einen Verschweißungsbereich mit dem Anschlusskabel verbunden wird,
- in einem Kontaktbereich an einer von der der Oberseite abgewandten Unterseite des Anschlusskabels eine Lotmasse aufgebracht wird,
- das Anschlusskabel mit der Lotmasse auf einer elektrisch leitfähigen Struktur auf einem Substrat der Scheibe angeordnet wird und mittels eines Haftmittels auf dem Substrat fixiert wird,
- das Anschlusskabel mit der elektrisch leitfähigen Struktur mittels der Lotmasse unter Wärmeeintrag elektrisch leitend verbunden wird.

Erfindungsgemäß wird ein erster flacher Bereich des Anschlusselements erwärmt, wobei die Lotmasse aufgeschmolzen und das Anschlusskabel angelötet wird.

Das Einbringen der Wärmeenergie erfolgt mittels eines resistiven oder induktiven Lötverfahrens oder Heißluft. Beim resistiven Lötverfahren (Widerstandslötverfahren) wird ein elektrischer Strom durch zwei Elektroden und das Anschlusselement zum Erwärmen des Anschlusselements eingespeist. Dabei liegen die Elektroden auf dem Anschlusselement bis zum Aufschmelzen der Lotmasse.

Ein weiterer Aspekt der Erfindung umfasst die Verwendung einer erfindungsgemäßen Scheibe in Gebäuden oder in Fortbewegungsmitteln für den Verkehr auf dem Lande, in der Luft oder zu Wasser, insbesondere in Kraftfahrzeugen oder Schienenfahrzeugen, bevorzugt als Windschutzscheibe, Heckscheibe, Seitenscheibe und/oder Dachscheibe, insbesondere als beheizbare Scheibe oder als Scheibe mit Antennenfunktion.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: eine Darstellung der erfindungsgemäßen Scheibe mit einem elektrischen Anschlusselement und Anschlusskabel,
- Figur 2: eine Querschnittsdarstellung entlang der Schnittlinie A-A' durch die Scheibe aus Figur 1 während des Lötens mittels Widerstandslötverfahren,
- Figur 3: eine Querschnittsdarstellung entlang der Schnittlinie A-A' durch die Scheibe aus Figur 1 während des Lötens mittels Induktionslötverfahren,
- Figur 4: eine Querschnittsdarstellung entlang der Schnittlinie A-A' durch die Scheibe aus Figur 1 während des Lötens mittels Heißluftlötverfahren
- Figur 5: ein Flussdiagramm einer Ausführungsform des erfindungsgemäßen Verfahrens.

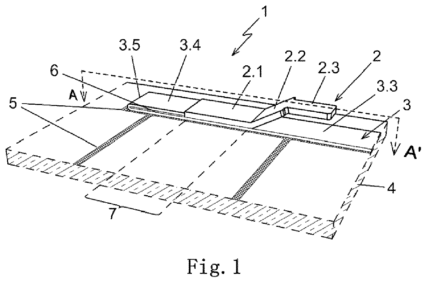

Figur 1 zeigt eine Draufsicht auf eine erfindungsgemäße Scheibe 1 mit einem elektrischen Anschlusselement 2 und Anschlusskabel 3. Die Scheibe 1 umfasst ein Substrat 4, das mit einer elektrisch leitfähigen Struktur 5 versehen ist. Das Substrat 4 ist ein dickes thermisch vorgespanntes Einscheibensicherheitsglas oder dünnes laminiertes Glas aus Kalk-Natron-Glas. Das Substrat 4 weist beispielsweise eine Breite von 150 cm und eine Höhe von 80 cm auf und ist als Heckscheibe eines Personenkraftwagens vorgesehen. Die elektrisch leitfähige Struktur 5 bildet ein Heizfeld auf einer Oberfläche des Substrats 4. Die elektrisch leitfähige Struktur 5 enthält Silberpartikel und Glasfritten. Im Randbereich der Scheibe 1 ist die elektrisch leitfähige Struktur 5 leicht verbreitet und bildet eine Anschlussfläche. Weiterhin umfasst die Scheibe 1 ein Anschlusskabel 3 und ein Anschlusselement 2.

Das Anschlusskabel 3 ist ein biegsames (flexibles) Flachbandkabelkabel. Dieses Anschlusskabel 3 verbindet die elektrisch leitfähige Struktur 5 auf dem Substrat 4 mit dem Anschlusselement 2. Dazu weist das Anschlusskabel 3 einen ersten Abschnitt 3.3, einen zweiten Abschnitt 3.4 und eine Faltung 3.5 auf, bei der der erste Abschnitt 3. 3 und der zweite Abschnitt 3.4 übereinander angeordnet sind. Der erste Abschnitt 3.3 und der zweite Abschnitt 3.4 verlaufen parallel zueinander und sind miteinander über Haftmittel 6 miteinander verklebt. Das Haftmittel 6 ist ein doppelseitiges Klebeband, das eine dauerhafte haftende Verbindung zwischen dem ersten Abschnitt 3.3 und dem zweiten Abschnitt 3.4 sicherstellt. Weitere Haftmittel 6 befinden sich auf einer unteren Oberfläche des Anschlusskabels 3. Die untere Oberfläche des ersten Abschnitts 3.3 des Anschlusskabels 3 ist dem Substrat 4 zugewandt und durch Haftmittel 6 mit dem Substrat 4 fest verklebt.

Derartige Anschlusskabel 3 werden auch als Flachleiter, Folienleiter oder Flachbandleiter bezeichnet. Unter Folienleiter wird eine elektrische Leiterbahn verstanden, deren Breite deutlich größer ist als ihre Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen.

Das Anschlusskabel 3 umfasst zumindest eine Leiterbahn 3.1, die von einer isolierende polymere Folie 3. 2 umgeben ist. Auf seiner dem Substrat 1 zugewandten Unterseite weist das Anschlusskabel 3 einen Kontaktbereich 7 auf. Im Kontaktbereich 7 wurde die polymere Folie 3.2 zum Teil entfernt, so dass die Leiterbahn 3.1 des Anschlusskabels 3 über eine Lotmasse 8 mit dem Bereich der elektrisch leitfähigen Struktur 5 elektrisch kontaktiert ist.

Die Lotmasse 8 bewirkt eine dauerhafte elektrische und mechanische Verbindung zwischen dem Anschlusskabel 3 und der elektrisch leitfähigen Struktur 5. Die Lotmasse 8 ist bleifrei und besteht aus 96,5 Gew.-% Zinn, 3 Gew.-% Silber und 0,5 Gew.-% Kupfer. Die Lotmasse 8 hat eine Dicke von 150 µm.

Das Anschlusselement 2 ist steif ausgebildet und zeichnet sich durch einen ersten flachen Bereich 2.1 aus. Das Anschlusselement 2 ist nicht direkt über die Lotmasse 8 mit der elektrisch leitfähigen Struktur 5 verbunden. Der erste flache Bereich 2.1 kontaktiert elektrisch das Anschlusskabel 3. Weiterhin umfasst das Anschlusselement 2 einen Übergangsbereich 2.2 und einen zweiten flachen Bereich 2.3. Der Übergangsbereich 2. 2 verbindet den ersten flachen Bereich 2.1 mit dem zweiten flachen Bereich 2.3. Der Übergangsbereich bildet einen Anstellwinkel α zum Anschlusskabel 3 beziehungsweise zur Substratoberfläche. Der Anstellwinkel α beträgt ca. beispielsweise 35°.

Der zweite flache Bereich 2.3 befindet sich an einem dem Anschlusskabel 3 abgewandten Ende des Anschlusselements 2. Der zweite flache Bereich 2.3 ist zur Kontaktierung an eine Spannungsquelle vorgesehen. Dazu weist das Anschlusselement 2 am zweiten flachen Bereich 2.3 einen Stecker auf, welcher als normierter Kraftfahrzeugflachstecker ausgebildet ist. Das Anschlusselement 2 hat beispielsweise eine Länge von 11 cm, Breite von 1 cm und eine Materialstärke von 1,8 mm. Das Anschlusselement 2 ist über eine Schweißverbindung mit dem Anschlusskabel 3 elektrisch verbunden.

Nach dem Einbau der vorgefertigten Scheibe 1 mit Anschlusskabel 3 und Anschlusselement 2 in eine Fahrzeugkarosserie, kann die elektrische Kontaktierung erfolgen. Dazu wird ein Verbindungskabel auf den Stecker des Anschlusselements 2 aufgesteckt.

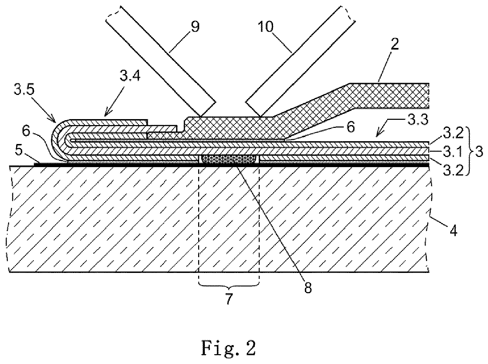

Figur 2 zeigt eine Querschnittsdarstellung entlang der Schnittlinie A-A' durch die Scheibe aus Figur 1 im Bereich des Anschlusskabels 3 während des Lötens mittels Widerstandslötverfahren. Das Substrat 4, die elektrisch leitfähige Struktur 5, das Anschlusselement 2, Anschlusskabel 3 und die Lotmasse 8 sind wie im vorstehenden Ausführungsbeispiel ausgestaltet.

Vor dem Einbau der vorgefertigten Scheibe 1 wird das Anschlusskabel 3 mit der Lotmasse 8 auf einer elektrisch leitfähigen Struktur 5 auf einem Substrat 4 der Scheibe 1 angeordnet und mittels eines Haftmittels 6 auf dem Substrat 4 fixiert. Nach der Fixierung des Anschlusskabels 3 und Anschlusselements 2 auf dem Substrat 4 erfolgt die elektrische Kontaktierung. Dazu berühren zwei Elektroden 9, 10 mit ihren Elektrodenenden den ersten flachen Bereich 2.1 des Anschlusselements 2. Jeweils eine Elektrode 9,10 wird im Randbereich des ersten flachen Bereichs 2.1 aufgesetzt. Dabei sind die Elektroden 9, 10 im wesentlich durch die Länge des ersten flachen Bereichs 2.1 beabstandet und an zwei gegenüberliegenden Randbereichen angeordnet. Dadurch wird ein elektrischer Lötstrom durch den ersten flachen Bereich 2.1 geleitet. Dies bewirkt eine Widerstandserwärmung im ersten flachen Bereich 2.1. Die im ersten flachen Bereich 2.1 erzeugte Wärme wird an die Lotmasse 8 übertragen. Diese Wärmeübertragung bewirkt ein Aufschmelzen der Lotmasse 8, durch das ein Lötkontakt zwischen dem Anschlusskabel 3 und der elektrisch leitfähige Struktur 5 entsteht.

Der Lötkontakt zwischen dem Anschlusskabel 3 und der elektrisch leitfähige Struktur 5 wird durch das Aufschmelzen der Lotmasse 8 erzielt. Beim anschließenden Erstarren der Lotmasse 8 wird eine elektrisch leitfähige Verbindung zwischen dem Anschlusskabel 3 und der elektrisch leitfähigen Struktur 5 hergestellt.

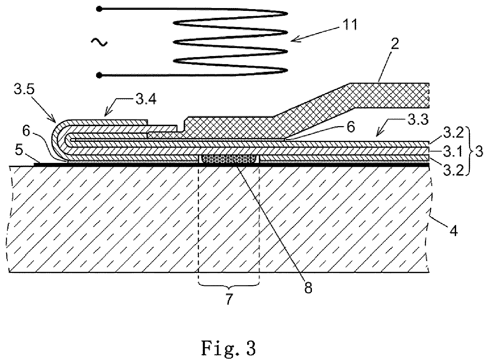

Figur 3 zeigt eine Querschnittsdarstellung entlang der Schnittlinie A-A' durch die Scheibe aus Figur 1 im Bereich des Anschlusskabels 3 während des Lötens mittels Induktionslötverfahren.

Die elektrische Kontaktierung des Anschlusskabels 3 und Anschlusselements 2 auf dem Substrat 4 kann alternativ zum Widerstandslöten mittels Induktion erfolgt. Das Induktionslötverfahren zeichnet sich dadurch aus, das eine stromdurchflossene Spule 11 ein Magnetfeld erzeugt. Die Spule 11 wird mit einem geringen Abstand zum ersten flachen Bereich 2.1 in unmittbare Nähe des Anschlusselements 2 angeordnet. Das durch die Spule erzeugte Magnetfeld durchdringt den ersten flachen Bereich 2.1 des Anschlusselements 2. Der erste flache Bereich 2.1 des Anschlusselements 2 wird durch Induktionsströme erwärmt. Die im ersten flachen Bereich 2.1 erzeugte Wärme wird an die Lotmasse 8 übertragen. Diese Wärmeübertragung bewirkt ein Aufschmelzen der Lotmasse 8, durch das ein Lötkontakt zwischen dem Anschlusskabel 3 und der elektrisch leitfähige Struktur 5 entsteht.

Die Frequenz der an die Spule angelegten Wechselspannung beträgt 5 bis 50 kHz und kann an die Form, Volumen und Material dem ersten flachen Bereich 2.1 bzw. der Lotmasse 8 angepasst werden. Damit bietet das induktive Löten grundsätzlich den Vorteil, dass die Wärme berührungslos und unmittelbar erzeugt wird.

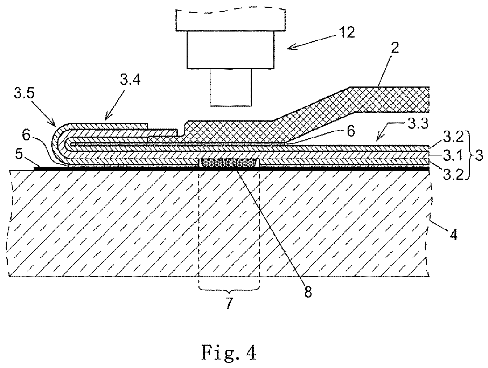

Figur 4 zeigt eine Querschnittsdarstellung entlang der Schnittlinie A-A' durch die Scheibe aus Figur 1 im Bereich des Anschlusskabels 3 während des Lötens mittels Heißluftlotverfahren.

Die elektrische Kontaktierung des Anschlusskabels 3 und Anschlusselements 2 auf dem Substrat 4 kann alternativ zum Widerstandslöten mittels Heißluft erfolgt. Dazu wird der erste flache Bereich 2.1 des Anschlusselements 2 durch eine über dem ersten flachen Bereich 2.1 angeordnete Heißluft Düse 12 erwärmt. Die im ersten flachen Bereich 2.1 erzeugte Wärme wird an die Lotmasse 8 übertragen. Diese Wärmeübertragung bewirkt ein Aufschmelzen der Lotmasse 8, durch das ein Lötkontakt zwischen dem Anschlusskabel 3 und der elektrisch leitfähige Struktur 5 entsteht.

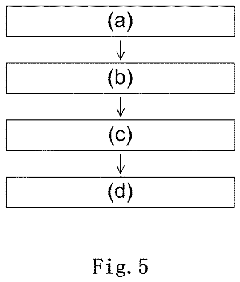

Figur 5 zeigt ein Ausführungsbeispiel des erfindungsgemäßen Verfahrens zur Herstellung einer Scheibe 1 mit einem elektrischen Anschlusselement 2 und Anschlusskabel 3 anhand eines Flussdiagramms. Das erfindungsgemäße Verfahren umfasst beispielsweise die folgenden Schritte:
- das Anschlusselement 2 wird auf einer Oberseite des Anschlusskabels 3 über einen Verschweißungsbereich mit dem Anschlusskabel 3 verbunden,
- im Kontaktbereich 7 an einer von der der Oberseite abgewandten Unterseite des Anschlusskabels 3 wird die Lotmasse 8 aufgebracht,
- das Anschlusskabel 3 wird mit der Lotmasse 8 auf der elektrisch leitfähigen Struktur 5 auf dem Substrat 4 der Scheibe 1 angeordnet und mittels des Haftmittels 6 auf dem Substrat 4 fixiert,
- das Anschlusskabel 3 mit der elektrisch leitfähigen Struktur 5 wird mittels der Lotmasse 8 unter Wärmeeintrag elektrisch leitend verbunden.

### Bezugszeichenliste:

- 1: Scheibe
- 2: Anschlusselement
- 2.1: erster flacher Bereich des Anschlusselements
- 2.2: Übergangsbereich des Anschlusselements
- 2.3: zweiter flacher Bereich des Anschlusselements
- 3: Anschlusskabel
- 3.1: Leiterbahn des Anschlusskabels
- 3.2: polymere Folie des Anschlusskabels
- 3.3: erster Abschnitt des Anschlusskabels
- 3.4: zweiter Abschnitt des Anschlusskabels
- 3.5: Faltung des Anschlusskabels
- 4: Substrat
- 5: elektrisch leitfähige Struktur
- 6: Haftmittel
- 7: Kontaktbereich
- 8: Lotmasse
- 9: Elektrode
- 10: Elektrode
- 11: Spule
- 12: Heißluft Düse

- A-A': Schnittlinie

## Patentansprüche

1. Scheibe mit einem elektrischen Anschlusselement (2) und Anschlusskabel (3) mindestens umfassend:
• ein Substrat (4),
• eine elektrisch leitfähige Struktur (5) auf einem Bereich des Substrats (4),
wobei
• das Anschlusskabel (3) an seiner dem Substrat (4) zugewandten Unterseite einen Kontaktbereich (7) aufweist, in dem eine Leiterbahn (3.1) des Anschlusskabels (3) mit dem Bereich der elektrisch leitfähigen Struktur (5) verbunden ist,
• das Anschlusselement (2) mit der Leiterbahn (3.1) des Anschlusskabels (3) an einer dem Substrat (4) abgewandten Oberseite des Anschlusskabels (3) über einen Verschweißungsbereich mit dem Anschlusskabel (3) elektrisch leitend verbunden ist,
**dadurch gekennzeichnet,**
**dass** die erfindungsgemäße elektrisch leitfähige Struktur eine Schichtdicke von 5 µm bis 40 µm aufweist,
**dass** das Anschlusselement (2) steif ausgebildet ist, einen ersten flachen Bereich (2.1) zur Kontaktierung des Anschlusskabels (3), einen Übergangsbereich (2.2) und einen zweiten flachen Bereich (2.3) an seinem vom Anschlusskabel (3) abgewandten Ende aufweist, und dass der Kontaktbereich (7) des Anschlusskabels (3) und der erste flache Bereich (2.1) des Anschlusselements (2) derart übereinander angeordnet sind, dass der flache Bereich (2.1) des Anschlusselements zur Übertragung von Wärme auf eine im Kontaktbereich (7) angeordnete Lotmasse (8) vorgesehen ist.

2. Scheibe nach Anspruch 1, wobei das Anschlusskabel (3) einen ersten Abschnitt (3.3), einen zweiten Abschnitt (3.4) und eine Faltung (3.5) aufweist, bei der der erste Abschnitt (3.3) und der zweite Abschnitt (3.4) übereinander angeordnet sind.

3. Scheibe nach einem der Ansprüche 1 bis 2, wobei das Anschlusskabel (3) flach und biegsam ausgebildet ist und die Leiterbahn (3.1) zumindest eine Metallfolie enthält.

4. Scheibe nach Anspruch 1 oder 3, wobei der Übergangsbereich (2.2) des Anschlusselements (2) eine Länge von mindestens 30% der Länge des Anschlusselements (2) aufweist.

5. Scheibe nach einem der Ansprüche 1 bis 4, wobei das Anschlusselement (2) zumindest Kupfer, eine kupferhaltige Legierung oder Stahl enthält.

6. Scheibe nach einem der Ansprüche 1 bis 5, wobei das Anschlusselement (2) einstückig ausgebildet ist.

7. Scheibe nach einem der Ansprüche 3 bis 6, wobei das Anschlusselement (2) mit dem Übergangsbereich (2.2) einen Anstellwinkel (α) im Bereich von 30° bis 90° zum Anschlusskabel (3) aufweist.

8. Scheibe nach einem der Ansprüche 3 bis 7, wobei das Anschlusselement (2) am zweiten flachen Bereich (2.3) zur Kontaktierung an eine Spannungsquelle vorgesehen ist.

9. Scheibe nach einem der Ansprüche 3 bis 7, wobei das Anschlusselement (2) am zweiten flachen Abschnitt (2.3) einen Stecker oder ein Kabel aufweist.

10. Verfahren zur Herstellung einer Scheibe (1) nach einem der Ansprüche 1 bis 9, wobei
• das Anschlusselement (2) auf einer Oberseite eines Anschlusskabels (3) über einen Verschweißungsbereich mit dem Anschlusskabel (3) verbunden wird,
• in einem Kontaktbereich (7) an einer von der der Oberseite abgewandten Unterseite des Anschlusskabels (3) eine Lotmasse (8) aufgebracht wird,
• das Anschlusskabel (3) mit der Lotmasse (8) auf einer elektrisch leitfähigen Struktur (5) auf einem Substrat (4) der Scheibe (1) angeordnet wird und mittels eines Haftmittels (6) auf dem Substrat (4) fixiert wird,
• das Anschlusskabel (3) mit der elektrisch leitfähigen Struktur (5) mittels der Lotmasse (8) unter Wärmeeintrag elektrisch leitend verbunden wird, und
• ein erster flacher Abschnitt (2.1) des Anschlusselements (2) erwärmt wird, so dass die Lotmasse (8) aufgeschmolzen und das Anschlusskabel (3) angelötet wird.

11. Verfahren nach Anspruch 10, wobei ein resistives oder induktives Lötverfahren oder Heißluft verwendet wird.

12. Verfahren nach Anspruch 10 oder 11, wobei die Lotmasse (8) bleifrei ist.

13. Verfahren nach einem der Ansprüche 10 bis 12, wobei die Schichtdicke der Lotmasse (8) kleiner oder gleich 6.0 × 10⁻⁴ m, besonders bevorzugt kleiner 2.0 × 10⁻⁴ m ist.

14. Verwendung einer Scheibe nach einem der Ansprüche 1 bis 9 in Gebäuden oder in Fortbewegungsmitteln für den Verkehr auf dem Lande, in der Luft oder zu Wasser, insbesondere in Kraftfahrzeugen oder Schienenfahrzeugen, bevorzugt als Windschutzscheibe, Heckscheibe, Seitenscheibe und/oder Dachscheibe, insbesondere als beheizbare Scheibe oder als Scheibe mit Antennenfunktion.

## Claims

1. Pane having an electrical connection element (2) and connection cable (3) at least comprising:
• a substrate (4),
• an electrically conductive structure (5) on a region of the substrate (4),
wherein
• the connection cable (3) has, on its lower face facing the substrate (4), a contact region (7), in which a conductor track (3.1) of the connection cable (3) is connected to the region of the electrically conductive structure (5),
• the connection element (2) with the conductor track (3.1) of the connection cable (3) on an upper face of the connection cable (3) facing away from the substrate (4) is electrically conductively connected to the connection cable (3) via a weld region,
**characterized in**
**that** the electrically conductive structure has a layer thickness from 5 µm to 40 µm,
**that** the connection element (2) is rigid, has a first flat region (2.1) for contacting the connection cable (3), has a transition region (2.2) and a second flat region (2.3) at its end facing away from the connection cable (3),
and **that** the contact region (7) of the connection cable (3) and the first flat region (2.1) of the connection element (2) are arranged one above the other such that the flat region (2.1) of the connection element is provided for transferring heat to a soldering compound (8) arranged in the contact region (7).

2. Pane according to claim 1, wherein the connection cable (3) has a first section (3.3), a second section (3.4), and a fold (3.5), in which the first section (3.3) and the second section (3.4) are arranged one above the other.

3. Pane according to one of claims 1 through 2, wherein the connection cable (3) is flat and flexible and the conductor track (3.1) contains at least one metal foil.

4. Pane according to claim 1 or 3, wherein the transition region (2.2) of the connection element (2) has a length of at least 30% of the length of the connection element (2).

5. Pane according to one of claims 1 through 4, wherein the connection element (2) contains at least copper, a copper-containing alloy, or steel.

6. Pane according to one of claims 1 through 5, wherein the connection element (2) is formed in one piece.

7. Pane according to one of claims 3 through 6, wherein the connection element (2) with the transition region (2.2) has a pitch angle (α) in the range of 30° to 90° relative to the connection cable (3).

8. Pane according to one of claims 3 through 7, wherein the connection element (2) is provided on the second flat section (2.3) for contacting a voltage source.

9. Pane according to one of claims 3 through 7, wherein the connection element (2) on the second flat section (2.3) has a plug or a cable.

10. Method for producing a pane (1) according to one of claims 1 through 9, wherein
• the connection element (2) is connected, on an upper face of a connection cable (3), via a weld region to the connection cable (3),
• a soldering compound (8) is applied in a contact region (7) on a lower face of the connection cable (3) facing away from the upper face,
• the connection cable (3) with soldering compound (8) is arranged on an electrically conductive structure (5) on a substrate (4) of the pane (1) and is fixed on the substrate (4) by means of an adhesive (6),
• the connection cable (3) is electrically conductively connected to the electrically conductive structure (5) by means of the soldering compound (8) under the introduction of heat,
• a first flat section (2.1) of the connection element (2) is heated such that the soldering compound (8) is melted and the connection cable (3) is soldered on.

11. Method according to claim 10, wherein a resistive or inductive soldering method or hot air is used.

12. Method according to claim 10 or 11, wherein the soldering compound (8) is lead-free.

13. Method according to one of claims 10 through 12 wherein the layer thickness of the soldering compound (8) is less than or equal to 6.0 × 10-4 m, particularly preferably less than 2.0 × 10-4 m.

14. Use of a pane according to one of claims 1 through 9 in buildings or in means of transportation for travel on land, in the air, or on water, in particular in motor vehicles or rail vehicles, preferably as a windshield, rear window, side window, and/or roof panel, in particular as a heatable pane or as a pane with antenna function.

## Revendications

1. - Vitre dotée d'un élément de raccordement électrique (2) et d'un câble de raccordement (3), comportant au moins :
- un substrat (4) ;
- une structure électriquement conductrice (5) sur une région du substrat (4) ;
- le câble de raccordement (3) présentant, sur sa face inférieure tournée vers le substrat (4), une région de contact (7) dans laquelle une piste conductrice (3.1) du câble de raccordement (3) est reliée à la région de la structure électriquement conductrice (5) ;
- l'élément de raccordement (2) à la piste conductrice (3.1) du câble de raccordement (3) sur une face supérieure du câble de raccordement (3) tournée à l'opposé du substrat (4) étant relié de manière électriquement conductrice au câble de raccordement (3) par l'intermédiaire d'une région de soudage,
**caractérisé par le fait**
**que** la structure électriquement conductrice présente une épaisseur de couche de 5 µm à 40 µm ;
**que** l'élément de raccordement (2) est réalisé de manière rigide et présente une première région plate (2.1) pour la mise en contact du câble de raccordement (3), une région de transition (2.2) et une seconde région plate (2.3) à son extrémité tournée à l'opposé du câble de raccordement (3) ;
et **que** la région de contact (7) du câble de raccordement (3) et la première région plate (2.1) de l'élément de raccordement (2) sont disposées l'une au-dessus de l'autre de telle sorte que la région plate (2.1) de l'élément de raccordement est prévue pour transmettre de la chaleur à une masse de brasure disposée dans la région de contact (7) .

2. - Vitre selon la revendication 1, dans laquelle le câble de raccordement (3) présente une première section (3.3), une seconde section (3.4) et un pli (3.5), avec lequel la première section (3.3) et la seconde section (3.4) sont disposées l'une au-dessus de l'autre.

3. - Vitre selon l'une des revendications 1 et 2, dans laquelle le câble de raccordement (3) est réalisé plat et flexible et la piste conductrice (3.1) contient au moins une feuille métallique.

4. - Vitre selon l'une des revendications 1 ou 3, dans laquelle la région de transition (2.2) de l'élément de raccordement (2) présente une longueur d'au moins 30% de la longueur de l'élément de raccordement (2).

5. - Vitre selon l'une des revendications 1 à 4, dans laquelle l'élément de raccordement (2) contient au moins du cuivre, un alliage contenant du cuivre, ou de l'acier.

6. - Vitre selon l'une des revendications 1 à 5, dans laquelle l'élément de raccordement (2) est réalisé d'une seule pièce.

7. - Vitre selon l'une des revendications 3 à 6, dans laquelle l'élément de raccordement (2) avec la région de transition (2.2) présente un angle d'inclinaison (α) dans la plage de 30° à 90° par rapport au câble de raccordement (3).

8. - Vitre selon l'une des revendications 3 à 7, dans laquelle l'élément de raccordement (2) est prévu sur la seconde région plate (2.3) pour la mise en contact avec une source de tension.

9. - Vitre selon l'une des revendications 3 à 7, dans laquelle l'élément de raccordement (2) présente sur la seconde région plate (2.3) une fiche ou un câble.

10. - Procédé de fabrication d'une vitre (1) selon l'une des revendications 1 à 9, dans lequel
- l'élément de raccordement (2) est relié au câble de raccordement (3) sur une face supérieure d'un câble de raccordement (3) par l'intermédiaire d'une région de soudage,
- une masse de brasure (8) est appliquée dans une région de contact (7) sur une face inférieure du câble de raccordement (3) tournée à l'opposé de la face supérieure,
- le câble de raccordement (3) avec la masse de brasure (8) est disposé sur une structure électriquement conductrice (5) sur un substrat (4) de la vitre (1) et est fixé sur le substrat (4) au moyen d'un agent adhésif (6),
- le câble de raccordement (3) est relié de manière électriquement conductrice à la structure électriquement conductrice (5) au moyen de la masse de brasage (8) sous apport de chaleur ; et
- une première section plate (2.1) de l'élément de raccordement (2) est chauffée de telle sorte que la masse de brasure (8) soit fondue et que le câble de raccordement (3) soit soudé par brasage.

11. - Procédé selon la revendication 10, dans lequel un procédé de brasage résistif ou inductif ou de l'air chaud est utilisé.

12. - Procédé selon l'une des revendications 10 ou 11, dans lequel la masse de brasure (8) est exemptes de plomb.

13. - Procédé selon l'une des revendications 10 à 12, dans lequel l'épaisseur de couche de la masse de brasure (8) est inférieure ou égale à 6,0 × 10⁻⁴ m , de façon particulièrement préférée, inférieure à 2,0 × 10⁻⁴ m.

14. - Utilisation d'une vitre selon l'une des revendications 1 à 9 dans des bâtiments ou dans des moyens de déplacement pour le transport sur terre, dans l'air ou sur l'eau, en particulier dans des véhicules automobiles ou des véhicules ferroviaires, de préférence en tant que parebrise, lunette arrière, vitre latérale et/ou vitre de toit, en particulier comme vitre chauffante ou comme vitre avec fonction d'antenne.
